# EUROPEAN PATENT SPECIFICATION

(11) **EP 1 731 063 B1**
(45) Date of publication and mention of the grant of the patent: **13.05.2009**
(21) Application number: 05105037.5
(22) Date of filing: 09.06.2005
(51) Int. Cl.: A47J 31/06

(54) **Capsule-holder for a device for preparing a drink from a capsule by injection of a pressurized fluid.**
Kapselhalterung für eine Vorrichtung zur Bereitung eines Getränkes mit einer Kapsel durch Einspritzen von unter Druck stehender Flüssigkeit
Porte-capsules pour appareil de préparation d'une boisson à partir d'une capsule par infusion de fluide sous pression

(43) Date of publication of application: 13.12.2006
(73) Proprietor: Nestec S.A., 1800 Vevey (CH)
(72) Inventor: Mandralis, Zenon, Ioannis, 1071, Chexbres (CH); Yoakim, Alfred, 1806, ST-LEGIER-LA CHIESAZ (CH); Denisart, Jean Paul, 1093, LA CONVERSION (CH); Denisart, Jean Luc, 1096, CULLY (CH); Pleisch, Hanspeter, 1800, Vevey (CH)
(74) Representative: Borne, Patrice Daniel

(56) References cited:
- EP-A- 1 092 376
- WO-A-97/43937
- US-A1- 2003 056 661

## Description

The present invention relates to a capsule-holder for a device for preparing a drink, in particular, a device using a capsule containing one or more food ingredients for the preparation of a drink. The invention also relates to a device furnished with such a capsule-holder. The invention also relates to a drinks distributor using such a device.

The use of capsules containing a substance for preparing a cold or hot drink by extraction or mixing with a pressurized fluid inserted into the capsule, such as water, is known particularly for producing a coffee of the espresso type, filter coffee, cappuccino, latte, macchiato, tea or chocolate, and is of value, in particular, for reasons of hygiene, freshness, conservation of the ingredients and ease of use.

Different types of machines are used for preparing drinks from sealed or permeable capsules containing a substance to be extracted such as ground coffee or tea, or a substance to be dissolved or dispersed such as instant coffee, chocolate or milk or a mixture or a simple combination of these substances. In general, the fluid for the extraction or dissolving of the substance is injected into the capsule through a wall; the extract or mixture is then formed in the enclosure of the capsule and it then pours in the form of a drink through one or more orifices. The injection may be carried out by an injector which pierces a membrane of the capsule or which inserts itself into a preformed inlet orifice of a wall of the capsule. The drink pours out of the capsule when a certain pressure is reached in the enclosure of the capsule. The capsule may thus interact with means used to delay the pouring, either opening means which open a wall of the capsule, for example reliefs against an outlet membrane, or else a filtering wall situated between the enclosure and the pouring orifice.

Patent Application WO 03/059778 relates to a capsule containing one or more ingredients which are opened by opening means engaging with means of holding back the drink under the effect of the pressure rise in the capsule. Such a capsule has amongst other advantages: i) the possibility of distributing drinks of different natures "without cross-contamination", that is to say without a first distributed drink transmitting one or more undesired characteristics, such as a taste, colour and/or odour, to a second drink distributed after the first, ii) the flexibility of designing capsules better suited to the ingredients and products to be distributed, iii) a better control and repetitivity of the extraction or mixing conditions, iv) a significant simplification of the distribution machine.

One disadvantage of the known systems of preparing drinks from a capsule arises from the fact that they are not usually designed to receive capsules of different shapes, sizes and/or requiring particular adaptations linked, for example, to the method of injecting the fluid into the capsule.

For example, a capsule containing a cappuccino mixture to be dissolved requires a larger volume, because the powdered milk that it contains takes up much more room than a capsule containing ground coffee for an espresso coffee, or else an instant coffee for a filter coffee. On the other hand, an instant coffee or tea usually requires less storage space. Also, certain soluble products, although not necessarily occupying a large volume, must nevertheless be dissolved in a gas-containing chamber of sufficient size in order to take on sufficient of this gas to create the froth. In order to reduce the packaging costs and take account of the characteristics or attributes of the drinks to be distributed (for example, a drink with froth or without froth), it is therefore preferable to design capsules whose size is suited to the ingredients contained and/or to the drinks prepared.

It is also known that the injection conditions considerably influence the quality of the drink produced. Depending on whether consideration is given to a substance originating from a grinding process or a substance to be dissolved or dispersed in a liquid such as instant coffee or a milk-based substance such as cappuccino, chocolate or other, or else a substance to be infused such as tea, the manner in which the water is delivered and circulates in the capsule may have a considerable influence on the quality of the final drink produced. The known devices are usually not designed to adapt or modify the conditions of injection according to the types of drinks to be produced.

Another disadvantage of the known devices arises from the fact that the injection means may rapidly become dirty and/or scaled and thus modify the characteristics of injection (like for example reducing the flow, increasing the pressure losses, modifying the direction of the jet, etc.) and therefore thus affect the quality and/or the attributes of the drink. These means are rarely accessible to the user. The user therefore has difficulty diagnosing the cause of the problem and consequently has difficulty remedying it.

Patent Application EP 1 440 638 relates to a machine for the preparation of a drink using capsules; the machine comprising a first piercing element forming an inlet orifice and a second piercing element forming an outlet orifice; the orifices being formed during the use of the capsule; the two piercing elements being formed in a single removable unit. Such a configuration aims only to make the piercing elements easier to clean.

Patent Application WO 2004/0006740 relates to a coffee machine operating with doses which comprise a support having two indentations placed side by side to receive two different doses. The indentations have annular bed-plates of different diameters, are offset in height, each corresponding to the dimensions of the flat bed-plate surface of a dose. In this case, only two different capsule volume options are available. Such a system is also relatively complex.

US 2003/0056661 relates to a method and device for preparing a hot beverage. However, there is no indication that the capsule holder comprises an injector and that it is at the same time removably connected to the water supply unit of the beverage apparatus.

WO 97/43937 relates to an adaptor for a prepackaged coffee dose such as a capsule comprising a receptacle suited for holding a coffee capsule and a lid comprising a nozzle-perforator device. However, the adaptor is not suitable for preventing hot water from leaking when the adaptor is removed from the water supply.

EP 1092376A2 relates to an espresso coffee machine particularly for domestic use comprising a capsule holder with a handle and sealing means which are mobile from a first upper position to a second position. Again, the device has a large water screen which causes hot water to spread and leak when the capsule holder is removed from the water boiler.

One of the objects of the present invention is to remedy the disadvantages of the devices of the prior art.

More particularly, one object is to design a system that is better able to receive capsules of particular shapes, sizes and/or requiring particular injection configurations relating to the nature of the ingredients and/or the drinks to be produced.

Another object is to make it easier for the user to access the injection means, and to make it easier to clean and/or descale the injection means of the device.

The invention also aims at other objects and particularly the solution of other problems as will appear in the rest of the present description.

For this, the invention relates to a device for the preparation of a drink from a capsule by injection of a pressurized fluid into the capsule comprising a fluid supply unit and an injector of fluid into the capsule; **characterized in that** the injector is separable from the fluid supply unit and in that the device comprises a capsule-holder configured to receive a capsule and in that the capsule-holder is removable from the supply unit.

Thus, by designing a capsule-holder that can be removed from the pressurized fluid supply unit, it is possible to conceive of changes or variations in the capsule-holder itself, as in the compatibility of the shape and/or size of the capsule and the capsule-holder and/or in the injection means or, where appropriate, still other possible functional interactions between the capsule and the capsule-holder.

"Separable" means that the injector can be separated from the supply unit when the capsule-holder is disengaged from the supply unit. The separation may be carried out either as a result of the very action of separating the capsule-holder from the supply unit, or manually by acting on the injector itself.

It will be understood that, in the context of the invention, the term "capsule" means a discardable or recyclable package, container, sachet or receptacle that contains one or more ingredients and is flexible, partially rigid or totally rigid.

The term "drink" is intended in the broad sense as including any type of hot or cold liquid food preparation.

The capsule according to the invention may contain one or more ingredients suitable for the production of a drink. The drink may be for example a coffee, tea, chocolate or a milk-based drink. The ingredients may be in the form of powder, grounds, infusion, liquid or gel or else a combination of these forms of ingredients.

In one aspect of the invention, the injection comprises at least one injection orifice to inject at least one jet of fluid into the capsule. The injector may take varying forms depending on the desired mode of injection.

In certain cases, the injector may comprise a perforation means which may be one or more pointed elements, or blades, or other sharp, cutting or tearing elements, configured to act on a rigid, semi-rigid or flexible wall of the capsule in order to create one or more ports of entry into the capsule for the insertion of at least one orifice for injection of fluid from the injector. In other cases the injector comprises a fluid manifold made in a wall; the said manifold leads to one or more injection orifices.

The injector is chosen according to the desired injection conditions, when, for example, a different drink is required, either from one and the same capsule or from a different capsule.

For example, one injector may be used to produce a properly directed, high speed jet into the enclosure of the capsule, in order to provide turbulence when the capsule contains ingredients to be dissolved and/or else to form a frothy drink. On the other hand, another injector may be used, for example, that is configured to produce a more diffuse fluid distribution and at a slower output speed, for example, when the capsule contains a bed of grounds such as ground coffee in order to thoroughly wet the ingredients and produce a coffee of the espresso type or filter coffee.

In a first embodiment, the injector forms part of, or is fitted to, the capsule-holder. Thus, when the capsule-holder is separated from the fluid supply unit, the injector is as a result also separated from the fluid supply unit. This has several additional advantages. The injector may thus be perfectly suited to the particular type of capsule-holder, therefore to a type of capsule capable of being received in the capsule-holder, without the user having to worry which injector to use for a given capsule-holder or capsule. In other words, this offers the possibility of combining a suitable pair: a capsule-holder and an injector, depending on the drink to be produced.

For example, a capsule containing a product to be dissolved, such as a mixture of coffee powder or powered milk to produce a cappuccino, requires a large size capsule-holder housing and an injector producing a directed and high-speed jet. A capsule containing a product to be extracted such as a ground coffee, to produce an espresso or filter coffee, requires a smaller capsule-holder volume and an injector producing one or several more diffuse and slower jets. The possibilities offered for configuring the capsule-holder/injector are therefore varied and naturally depend on the characteristics sought for the drinks to be produced.

In another embodiment, the injector forms part of, or is fitted to, the fluid supply unit. In this case, the injector may be directly associated with the supply unit. Only the advantages of the flexibility offered by the possible changes or interchangeability of the capsule-holder are then obtained. However, such an embodiment has the advantage of a simpler design of the capsule-holder. It also reduces the possible disadvantages or small risks linked to the operation of the injector, such as the risks of receiving pricks or other minor accidental wounds.

The injector is preferably configurable on the capsule-holder in a reference position relative to the capsule that corresponds to the position of injection into the capsule. Thus, the injector can be configured on the capsule-holder in a reference position relative to the capsule that corresponds to the position of injection. Thus, there is the assurance that the injector is in the correct position relative to the capsule itself. Thus, the user does not have to worry about the correct way of placing the injector relative to the capsule.

Positioning means are then provided to place the injector in the injection position, before or during the linkage between the capsule-holder and the fluid supply means. This prevents any risk of an incorrect association between the injector and the supply unit when the capsule-holder and the supply unit are assembled to prepare a drink.

More particularly, according to one possible aspect, the injector forms part of an injection system on the capsule-holder which renders it mobile between a disengaged position and a position of injection into the capsule. In the disengaged position of the injector, a capsule may be freely positioned in the capsule-holder. Then, the injector may move into the injection position. In particular, in the injection position, the piercing means is engaged in piercing the capsule and the injection orifice is then correctly inserted and placed in the capsule enclosure.

In one possible embodiment, the injection system comprises
- an injector support piece which is mounted in rotation on the edge of the capsule-holder housing;
- an elastic means which keeps the said support piece in the injection position;
- an actuation means to move the support piece and the injector into the disengaged position against the action of the elastic means.

Thus, the injector is automatically placed in the injection position after a capsule has been placed in the capsule-holder - that is to say, when the actuation means is released - so that the elastic means forces the support piece to place the injector in the injection position against the capsule. For example, the system and its elastic means are configured to bend, by the return force created, the support piece of the injector against the surface of the capsule to be pierced, thus obliging the injector to pierce the said surface.

As for the injector, it is usually connected in sealed manner to the fluid supply unit by relative movement of at least a part of the supply unit and the injector. The supply unit comprises a fluid outlet portion which then engages by pressing against a fluid inlet portion of the injector. The connection is therefore preferably made by simple free connection, or by mechanical clipping and by the force of contact or between the supply unit and the injector. Such a connection therefore considerably simplifies the device. It also renders the injector automatically separable from the unit as soon as the force of contact is relaxed or a simple opposite reopening force is applied (in the case of mechanical clipping for example); that is to say when, in a general manner, the removable capsule-holder is simply separated from the supply unit for example when a used capsule is replaced by a new capsule.

In an advantageous example, the injector comprises a substantially frustoconical inlet portion and the fluid supply unit comprises a complementary substantially frustoconical fluid outlet portion which engages against the fluid inlet portion of the injector. This therefore provides a free connection of the cone-on-cone type without an additional connection means. An additional sealing means may be used such as one or more seals, such as an O-ring or other means. Other surface arrangements may however be envisaged within the capabilities of those skilled in the art without departing from the scope of the invention.

According to one aspect of the invention, the capsule-holder comprises an elongated element forming a handle. As a result, the manual insertion of the capsule-holder into the fluid supply unit is easier.

Thus, according to one possible embodiment, the capsule-holder and the supply unit comprise additional means of engagement allowing the capsule-holder to be prepositioned in the supply unit in a configuration in which the injector is placed in a reference position relative to the fluid supply means of the supply unit. This prepositioning can be used to configure the actual reference position of the injector by reference to the supply means against which it is planned to be attached. The supply means are also moved to carry out the association of the supply means with the injector itself.

For example, the complementary means of engagement of the capsule-holder and the supply unit may comprise a complementary set of edges and guide ribs. The prepositioning of the capsule-holder in the supply unit consists for example in inserting the capsule-holder by sliding the capsule-holder along the edges-ribs assembly in a preferred direction. The insertion by sliding is easy for the user to accomplish, reliable and does not require any particular force.

More particularly, the supply unit comprises a guide base in which the capsule-holder interacts in insertion up to the reference position of the fluid supply means;
a fluid supply base comprising a fluid outlet connector configured to associate itself in connection with a complementary connector of the injector;
the said supply base being mobile relative to the guide base from a disengaged position of the connectors to an engaged sealing position of the connectors. Such a configuration of the unit in two distinct parts, a supply base and a guide base, has the advantage of making it easier to position the capsule-holder in two stages; a first stage for the insertion by sliding the capsule-holder up to the correct prepositioning of the injector, a second stage for associating the supply means with the injector once the capsule-holder and the injector are in the reference position. These two stages are easy for an averagely careful user to carry out.

According to a particular embodiment, the fluid supply base of the supply unit is thus articulated to the guide base by latching means, so that a pressure in a preferred direction distinct from the capsule-holder insertion position established on the capsule-holder causes the said supply base to close relative to the said guide base in the engaged position of the connectors and therefore causes the supply unit to close against the capsule-holder. The means employed, particularly latching means, to cause the supply base to close against the capsule-holder are reliable in use. They provide an accurate and repetitive engagement of the various pieces over a large number of cycles.

According to one aspect, the invention thus relates to a capsule-holder, as such, intended to be connected to a fluid supply unit of a drink preparation device to prepare a drink from a food substance contained in a capsule by inserting a fluid into the said capsule, the said capsule-holder comprising a cup furnished with a housing to receive a capsule; the capsule-holder comprising an injection device furnished with an injector capable of being connected to the fluid supply unit and configured for transferring this fluid from the supply unit into the capsule in the form of at least one jet of fluid.

In a general manner, the injector comprises a fluid inlet orifice, an injection duct and at least one injection orifice for injecting at least one pressurized jet of fluid into the capsule.

The injection device comprises a support piece or a cover, partially or totally covering the cup, on which the injector is mounted. The support piece or the cover is mobile relative to the cup so that the injector can be moved out of the cup housing and thus the cup can be loaded with a capsule. The injection device thus moves the injector from a position of injection into the capsule to a retracted position allowing the capsule to be placed in the housing. In the engagement position, the injector is preferably off-centre in the housing. Such a position favours a swirling movement of the fluid in the capsule. This position also makes it possible to make a smaller injector support piece, partially covering the housing and therefore less of a lever effect which gives a greater pressure of the injector against the capsule for a better injection seal, if necessary, a more effective perforation of the capsule wall.

The injector comprises at least one sealed bearing surface intended to come to bear against a fluid supply duct of the supply unit. The bearing surface is substantially frustoconical. This frustoconical surface may have a rectilinear or curved (convex or concave) generatrix.

According to one embodiment, the injector comprises at least one nozzle which is inserted into the capsule and at the end of which the injection orifice is placed.

The nozzle preferably has a portion of perforation or of cut-away to form at least one perforation or cut-away in an inlet wall of the capsule to allow it to be inserted. The nozzle may also be non-perforating and be inserted into a preformed orifice of the capsule wall.

According to an alternative, the injector comprises a simple connector (instead of the nozzle) terminating in the injection orifice and which is simply arranged against an orifice of the capsule wall.

The nozzle or the connector has a sealing means configured between the nozzle and the perforation or cut-away of the capsule wall, when the injector is in the position of injection into the capsule. The sealing element at the base of the said nozzle or of the said connector provides the seal between the nozzle or connector and the said wall of the capsule so that the pressurized fluid in the capsule cannot come out between the injector and the injection orifice in the capsule.

In one embodiment, the injection device comprises a support piece which supports the injector and partially covers the cup. In one embodiment, the support piece is itself mounted pivotably on the edge of the cup. An elastic return means keeps the support piece and its injector in contact with the inlet wall of the capsule. In this way, the seal is better preserved when the capsule-holder is removed from the supply unit since the injector is sure of remaining in contact with the capsule.

The injector also comprises a means of blocking the duct. This blocking means, in combination with the sealing element, serves to keep the capsule wall sealed off from the air when the capsule-holder is separated from the fluid supply unit. This prevents air entering the capsule, and therefore prevents liquid trickling to the bottom of the capsule. In certain cases, when a residual pressure remains high, as with ground coffee, this also prevents a pressurized liquid return effect outside the injector, at the time when the capsule-holder is separated from the fluid supply unit.

A blocking means is for example a valve. Such a valve is configured to open, in the direction of injection, under the effect of the injection of the fluid in the injector and to close as soon as the injection stops. The closure of the valve may be activated by an elastic element and/or by the effect of the residual pressure in the capsule. Such a valve may be a ball or needle valve, an iris valve or an equivalent means.

Another means of closure is, for example, a portion of duct of small cross section causing a retention of liquid by capillary attraction. The capillary attraction portion of duct preferably has a diameter of less than 1 mm, preferably less than 0.7 mm. The capillary attraction portion also preferably has a length of at least 1 mm and less than 3 mm. A greater length creates too great a pressure loss, therefore an insufficient pressure in the capsule. Too short a length is insufficient to cause the desired effect of blocking the duct.

The injector duct may advantageously be rectilinear to make the latter easier to maintain. It is then oriented vertically towards the bottom of the cup. Because of the small cross section of the duct, a pressurized jet effect is produced in the capsule with a powerful mixing effect, which promotes the dissolving of the soluble substances.

In other possible embodiments, the duct has a succession of rectilinear portions making between them a non-zero angle of inclination. In this case, the duct terminates in a portion oriented at a non-zero angle relative to the vertical axis of the cup and offset relative to the centre of the cup. Such an orientation favours a vortex effect in the capsule for a better dissolving of the soluble material contained in the capsule.

In other possible embodiments, the injection device comprises an injection wall or a cover entirely covering the cup. Such a configuration may be useful for several reasons. On the one hand, the injection of the fluid may be better distributed in the capsule. On the other hand, the wall or cover may maintain a pressure against the sealing edges of the capsule, which prevents the latter from delaminating when the pressure in the capsule reaches high values. The wall may also provide the seal to the injection fluid between the bottom surface of the cover and the top face of the capsule, by the sealing pressure of a clamping edge of the cover against an edge of the capsule and on the edge of the cup, the edge of the capsule then being sandwiched between the two clamping edges. In this case, it is necessary to provide a seal which presses either on the peripheral clamping edge of the cup or on the clamping edge of the cover.

The invention also relates to a drinks distributor comprising a device as previously defined.

The invention will be better understood on studying the embodiments taken as non-limiting examples of the invention and illustrated in the appended figures in which:
Figure 1 represents a view in perspective of a distributor comprising a preparation device according to the invention;
Figure 2 shows a view in perspective of the preparation device before insertion of the capsule-holder into the fluid supply unit;
Figure 3 shows a view in perspective of the capsule-holder itself and of a capsule when it is placed in the capsule-holder;
Figure 4 shows a view in perspective of the capsule-holder and of a capsule placed in the capsule-holder;
Figure 5 shows a view in longitudinal section of the capsule-holder of Figure 4;
Figure 6 shows a detail view of the capsule-holder injector;
Figure 7 shows an exploded view of the reception unit;
Figure 8 shows a view in section of the preparation device in the closed position when the supply unit is connected to the injector;
Figure 9 shows the insertion of the capsule-holder into the fluid supply unit before closure and connection to the injector;
Figure 10 shows the closure of the supply unit and the connection to the injector;
Figure 11 shows a view in perspective of a variant of the capsule-holder which houses a capsule of a size different from the size of the preceding embodiment;
Figure 12 shows a view in section of the capsule-holder of Figure 11;
Figure 13 shows a detail of the capsule-holder injector of Figure 12;
Figure 14 shows a view in longitudinal section of another variant of a capsule-holder with another type of injector;
Figure 15 shows a view in longitudinal section of yet another variant of a capsule-holder with another type of injector;
Figure 16 shows a view in longitudinal section of a capsule-holder according to another variant of the invention;
Figure 17 shows a view in longitudinal section of a device according to a variant with the capsule-holder of Figure 16 inserted into the supply unit;
Figure 18 shows a view from above of another variant of a capsule-holder according to the invention;
Figure 19 shows a view in section along A-A of Figure 18 when the injector is in the position of injection into the capsule;
Figure 20 is a similar view to Figure 19 but with the injector in the retracted position with respect to the capsule;
Figure 21 shows only the injector of Figure 18 and in side view;
Figure 22 shows only the injector of Figure 21, in perspective, showing the injection face;
Figure 23 shows only the injector of Figure 21, in perspective, showing the face of connection to the supply device;
Figure 24 shows a view of the capsule-holder with a capsule according to another variant of the invention;
Figure 25 shows the capsule-holder and its capsule of Figure 24 in longitudinal section.

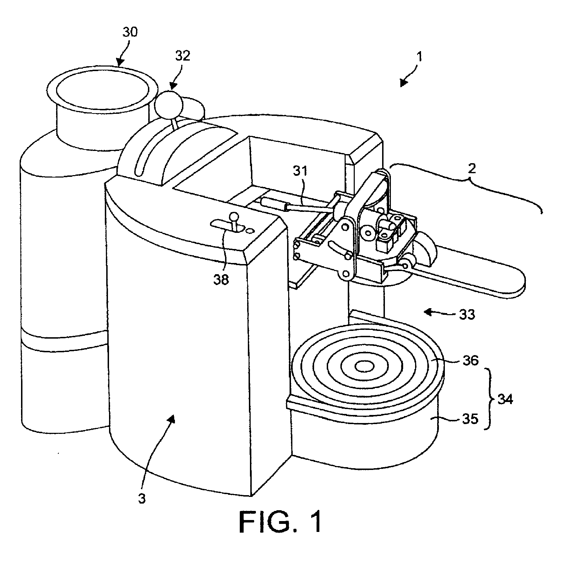

With reference to Figure 1, a preferred embodiment of a drink distributor or distribution machine 1 is illustrated in perspective which comprises a preparation device or module 2 according to the invention. The device will be described in greater detail in the rest of the present description. It is connected to a frame 3 of the machine which comprises a water supply system, known per se, configured to supply the device with water under pressure comprising a water reservoir 30, such as a transparent jar, a pump and a water heater (not visible) inside the frame, a water inlet duct 31 connecting the pump and the water heater to the device 2. The inlet of water into the device is controlled by an actuation system 32 comprising, for example, as known per se, a valve and a manually actuatable lever. Any other actuation system may be envisaged such as a stop button associated with an electromechanical valve. A main electricity supply control 38 is provided on the frame which is used to power up the machine and, for example, to begin if necessary the preheating of the water heater to preheat a volume of water.

Usually the distribution machine has a distribution zone 33 suitable for receiving a receptacle. The zone extends vertically between the preparation device 2 and a receptacle support 34 furnished for example with a drip tray 35 and a drain grid 36, both removable from the frame for cleaning.

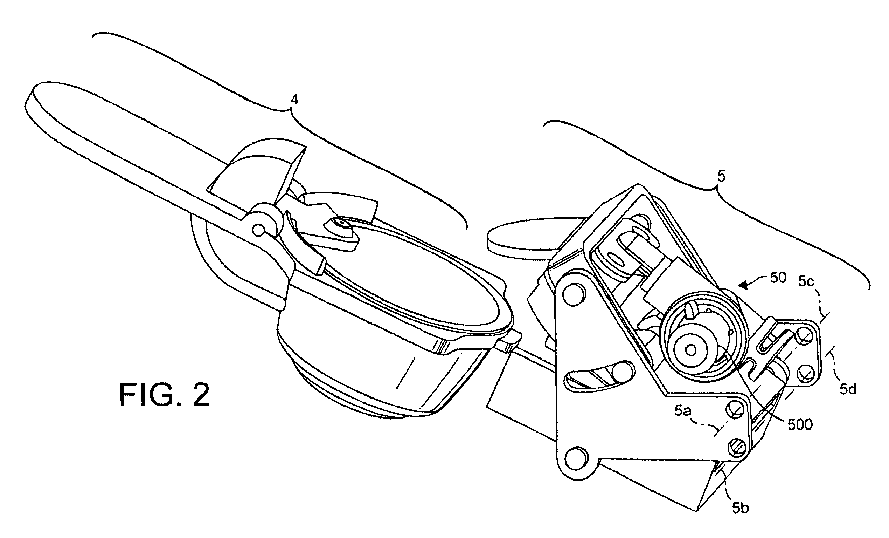

The device or module itself for preparation from a capsule will now be described with reference to Figures 2 to 11.

The preparation device 2, as shown in Figure 2, comprises, on the one hand, a capsule-holder 4 and, on the other hand, a pressurized fluid supply unit 5. According to an important aspect of the invention, the capsule-holder 4 is configured to be associated with the supply unit in removable manner according to the complementary engagement means that will be described in greater detail hereinafter. The supply unit 5 is, for its part, attached to the frame of the machine both mechanically and in fluid communication. More precisely, the supply unit 5 is attached by mechanical connection means such as screws or other means, through connection axes 5a-5d. The unit communicates with the pump and the water heater via the duct 31 which is connected to the fluid connector 50 positioned above the unit. The fluid connector 50 may also comprise a back pressure valve 500 which keeps the duct closed below a minimal hydraulic pressure upstream of the valve.

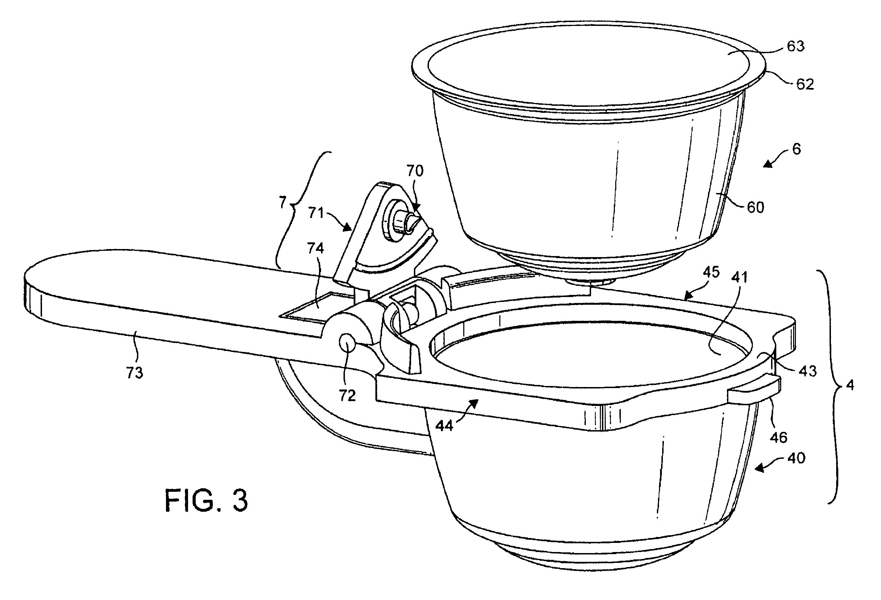

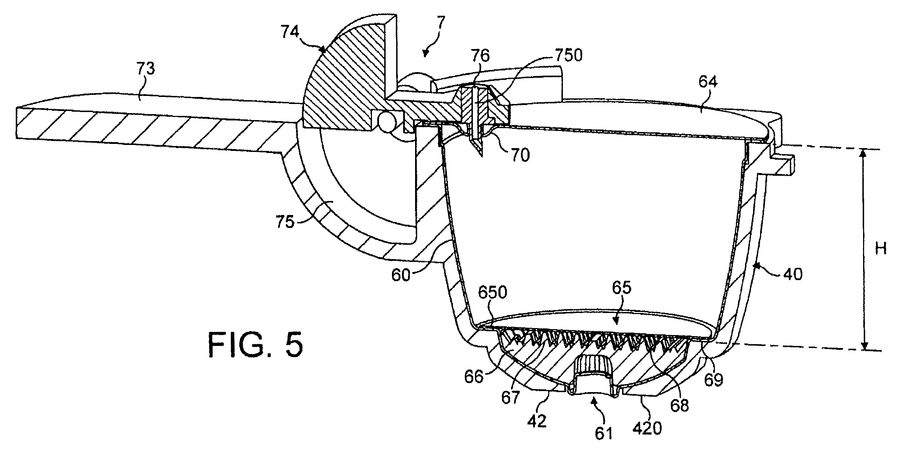

The capsule-holder 4, with reference to Figures 3 to 5, is configured to receive a capsule 6. For this, the capsule-holder is furnished with a cup 40 with walls furnished with internal surfaces that preferably espouse the general shape of the capsule. The matching of the capsule-holder to the shape of the capsule is visible in Figure 5. Thus, a capsule body 60 comprises external surfaces that complement the internal surfaces or housing 41 of the cup. Thus, a type of capsule to deliver a particular drink may be associated with a capsule-holder of matching configuration. It is therefore easy, by modifying the size and/or the shape of the cup, to reject a capsule in the capsule-holder which is not then intended for such a capsule-holder. This can be used to control the standards, the features and/or the quality of the distributed products.

The cup of the capsule-holder ends towards the bottom in a discharge opening 42 furnished with edges 420 configured to clear a pouring orifice 61 of the capsule. Preferably, this opening is configured in size to prevent its edges 420 from being soiled by the drink which flows through the capsule; this limits cleaning and reduces the risks of cross-contamination between two drinks. Furthermore, the pouring orifice 61 extends preferably downwards substantially beyond the edges 420 of the cup so as to reduce the risk of the liquid contacting these edges. For this, the edges 420 may also be thinner than the walls of the rest of the cup 40.

As shown in Figure 3, the cup extends upwards via bearing edges 43 allowing the capsule 6 to rest by means of its lateral edges 62. The capsule is thus held in the capsule-holder in a stable position with a transverse fluid inlet wall 63, unencumbered (not covered) towards the top. The wall may be a membrane sealed on the edges for example or a semi-rigid wall connected to the body by other means. As an indication, the walls of the body 60 are typically made of a plastic material chosen from the set comprising EVOH, PVDC, PP, PE, PA in single- or multi-layer form. The body 60 is hermetically sealed by the fluid inlet wall 63, for example, by means of a lid that is heat-sealed onto the edges of the body 60. The lid is typically made of a material capable of being perforated by perforation means, in particular an injector, which will be described hereinafter. The material of the lid 63 may for example be chosen from the set comprising aluminium, an aluminium/polymer composite, cellulose/aluminium/polymer, a pure single-layer or multi-layer polymer.

In the example shown, it will be noted that the capsule 6 preferably has its own opening means configured to allow the drink to pass through the pouring orifice 61 in a configuration in which the capsule is pressurized by the fluid injected into the latter. Thus, as shown in Figure 5, the capsule comprises in its bottom part a thin film 65 sealed on an inner edge 650 of the body 60 of the capsule. This film 64 is placed above a disc 66 comprising a plurality of elements in relief 67 spaced out on the surface of the disc and delimiting a plurality of channels 68 emerging at the periphery of the said disc. For a more detailed description of the capsule 6, refer to the international Patent Application WO 03/059778 filed on 13 January 2003 in the name of the applicant and whose entire content is incorporated here by reference, without however wishing to limit the present device to the reception of a capsule described in this application.

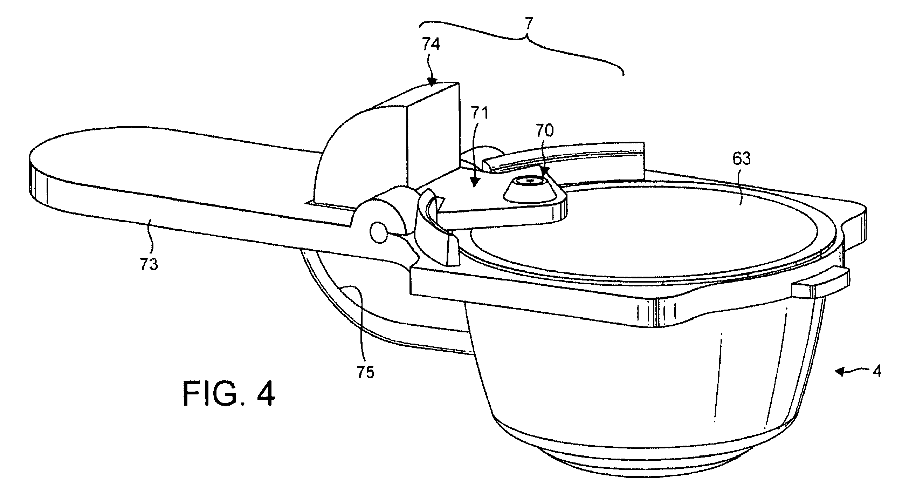

According to one aspect of the invention, the capsule-holder 4 and an injector 70 intended to inject the fluid under pressure into the capsule are linked together. The injector may form part of the capsule-holder or be fitted in separable manner thereto. In the preferred example illustrated in Figure 3, the injector is the piece 70 which forms part of an injection system 7 comprising a support piece 71 of the injector 70 mounted rotatably on a side of the peripheral edge of the cup 40. The piece 71 is mounted rotatably along the axis of articulation 72 connected to the side of the cup. The side on which the support piece 71 is mounted is preferably that which comprises a handle 73 to facilitate both the grasping of the capsule-holder and the handling of the injection system on disengagement. The support piece 71 may thus be moved into a disengaged position in which the injector 70 is disengaged from the opening of the cup (Figure 3) to allow the insertion of a capsule into the cup. Then, the support piece is rotated into a position of engagement in which the injector engages in perforation of the capsule inlet wall (Figure 4).

The injection system 7 has an elastic means such as at least one spring (not shown) and an actuation means 74 to move the support piece 71 and the injector that is fixedly attached to it against the force of the elastic means into the disengaged position to allow the insertion of the capsule. The actuation means 74 may be a pawl which is manipulated with the thumb and engages in a recess 75 of the front part of the handle 73. Thus, when the pawl is not pushed down, the injection system is in the engagement position without the risk of the user being pricked.

As shown in Figure 3, the capsule-holder has lateral guide edges 44, 45 in the shape of rectilinear ribs extending, on the one hand, outwards and, on the other hand, in the direction of insertion of the capsule-holder into the supply unit. These edges extend along the opening of the cup 40 in order to provide a good seat for the capsule-holder in the insertion unit. On the front side of the capsule-holder there may also be provided a shape recognition element or key 46 intended to engage in a complementary shape of the supply unit.

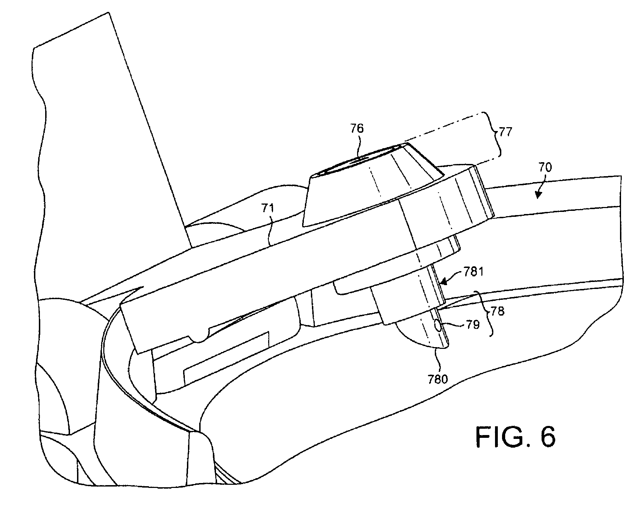

One example of an injector is described with reference to Figures 3, 5 and 6. The injector comprises an inlet orifice 76 formed on the anterior face of an inlet portion or connector 77. The inlet portion or connector 77 extends in relief over the top edge of the support piece 71 and is preferably frustoconical in shape. At its opposite part, the injector 70 is extended by a perforation portion 78 which ends in a blade or cutting surface 780 allowing the portion to be inserted by perforation through the inlet wall 63 and inside the capsule. The portion also comprises one or more fluid outlet orifices 79 which are oriented in a manner suitable for distributing the fluid inside the capsule in one or more appropriate directions as shown in Figures 5 and 6. The inlet orifice 76 and the outlet orifice 79 are connected by an internal duct 750 which traverses the injector in the axial direction.

The internal duct of the injector may be dimensioned so that a capillary effect is generated to keep the fluid in the duct when the fluid pressure is stopped. The advantage is to prevent the capsule from dripping when the capsule-holder is separated from the supply unit after extraction. The fluid is thus kept in the duct by capillary attraction, which, in combination with the seal created between the injector and the capsule surface, prevents the air from entering the capsule and therefore prevents the fluid still contained in the capsule from pouring through the pouring orifice 61 of the capsule. The duct preferably has a diameter of 0.7 mm or less, preferably lying between 0.4 and 0.6 mm and has a length of at least one 1 mm, preferably, at least 2 mm.

For soluble products, the point of injection and the direction of injection is preferably arranged at a distance from the centre of the capsule or of the cup 40 and the axis of the fluid outlet orifice is preferably oriented in a direction which passes away from the centre of the capsule or the cup 40. This gives a vortex effect which promotes the dissolving of the soluble ingredients inside the capsule. It should be noted that the injection orifice could be oriented differently. For example, the injection orifice 79 could be in the same axis as the rectilinear duct 750. Such a configuration of the orifice 79 in the extension of the duct 750 may be advantageous for making the duct easier to clean, in the case of blocking or scaling, with a simple needle or other means.

The injector also comprises a sealed portion 781 which forms a zone of greater cross section than the perforation portion 78 which is adjacent to it. The sealing portion is preferably made of softer material than the perforation material to serve as an external seal around the perforation made in the inlet wall 63 of the capsule. This may be an elastomer or silicone ring for example. The advantage of such a device is that the seal is made on a small circumference around the perforation with the portion 781 which presses on the wall of the capsule sufficiently to provide this seal; this greatly simplifies the general design of the fluid supply in the capsule. The seal thus produced around the perforation of the capsule is maintained when the capsule-holder is separated from the fluid supply unit; this has the effect, in combination with appropriate means provided in the injector to keep fluid in the injector and thus prevent the inlet of air, of preventing the capsule from dripping when the latter still contains a quantity of fluid. Appropriate means may be a capillary duct inside the injector or else an anti-return valve which closes the inlet of the duct such as a slot valve, ball valve or needle valve.

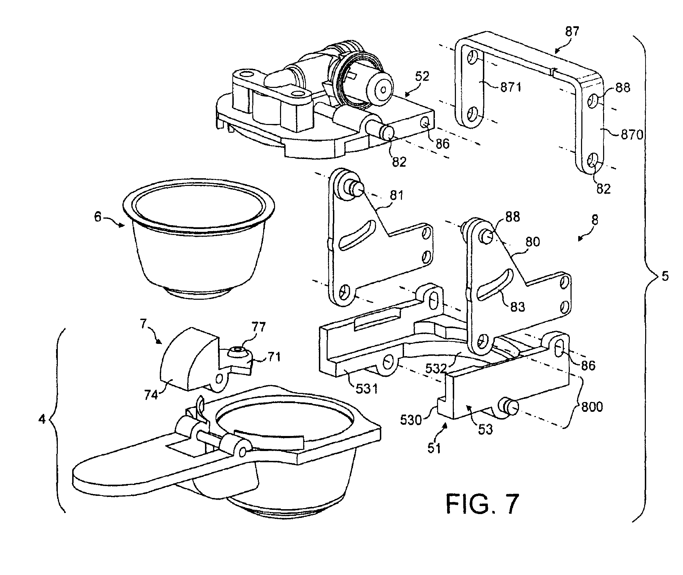

The structure of the supply unit will now be described with reference to Figures 7 to 10. The supply unit comprises a main guide and reception base 51 intended to receive the capsule-holder 4 in the unit - a position in which the injector is placed with reference to the fluid supply means of the supply unit. The supply unit thus has a second part called the supply base 52 which actually supports the fluid supply means. The guide base 51 and the supply base 52 are mounted articulated relative to one another so that the supply base and the guide base may adopt two relative positions: a position of disengagement between the injector 70 and the fluid supply means and a position of engagement between the injector 70 and the fluid supply means.

The guide base 51 is formed, more precisely, of a guide element in a transverse U-shape, 53, whose lateral sides have longitudinal guide ribs 530, 531 complementing the guide edges 44, 45 of the capsule-holder. The guide element 53 terminates in a posterior transverse wall 532 serving as an abutment to the capsule-holder in its insertion position. A bolt-shaped housing 533 to receive the key 46 ensures the definite correct engagement of the capsule-holder in the reference position.

The guide base and the supply base are articulated, on the one hand, by an articulation shaft 86 situated behind the said bases and, on the other hand, by a latching system 8 which comprises two wings 80, 81, mounted fixedly at the rear onto the frame via the articulation shafts 5a-5c. The guide base 51 is thus mounted on the side wings 80, 81 by two side articulation shafts 800 allowing the guide base to pivot relative to the wings fixed to the frame. The fluid supply base is also connected to each side of the wings by two articulations 82 guided into two arced oblong guide openings 83 made in the said wings 80, 81 of the latching system.

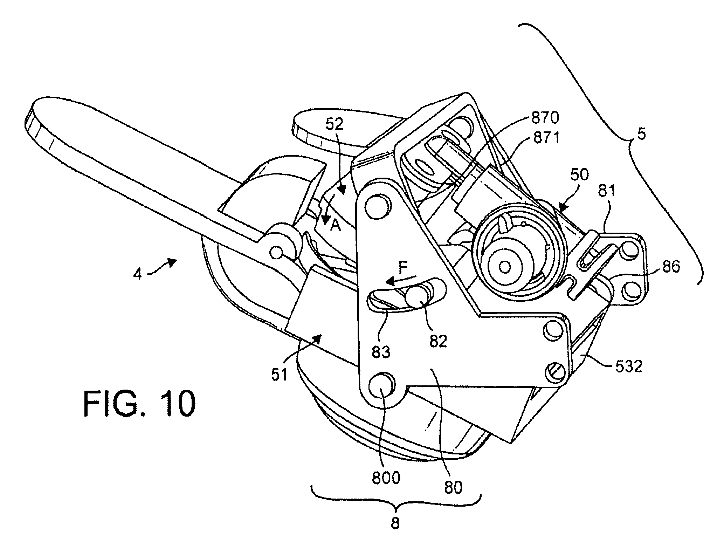

As shown in Figure 10, the guide openings 83 are configured so that, when the capsule-holder is brought manually downwards (direction O), the guide base 51 pivots relative to the wings 80, 81 about the shaft 800 and brings the supply base 52 which then closes on the guide base 51 in the direction represented by the arrow A since the shafts 82 are forced to guide into the openings 83 in the direction F.

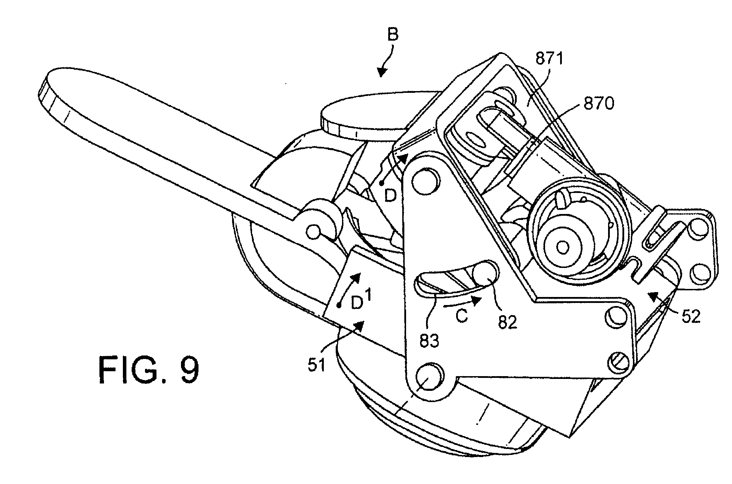

A reopening lever 87 is also provided to make the reopening of the supply unit easier. The lever 87 is in the form of an inverted U-shaped yoke with two side legs 870, 871. The legs 870, 871 are mounted pivotably on the shaft 88 on the top part of the wings 80, 81 and are guided along the articulations 82 into the openings 83. Thus, as shown in Figure 9, when the lever is activated manually in the direction of the arrow B, particularly downwards, the legs of the yoke pivot about the shaft 88 and bring the articulation 82 in the direction C, rearwards, which has the effect of bringing the supply base 52 upwards (direction D), hence reopening. When the articulation abuts in the opening, it is the guide base 51 that is brought upwards (direction D1) to return to the opening or insertion position of the capsule-holder.

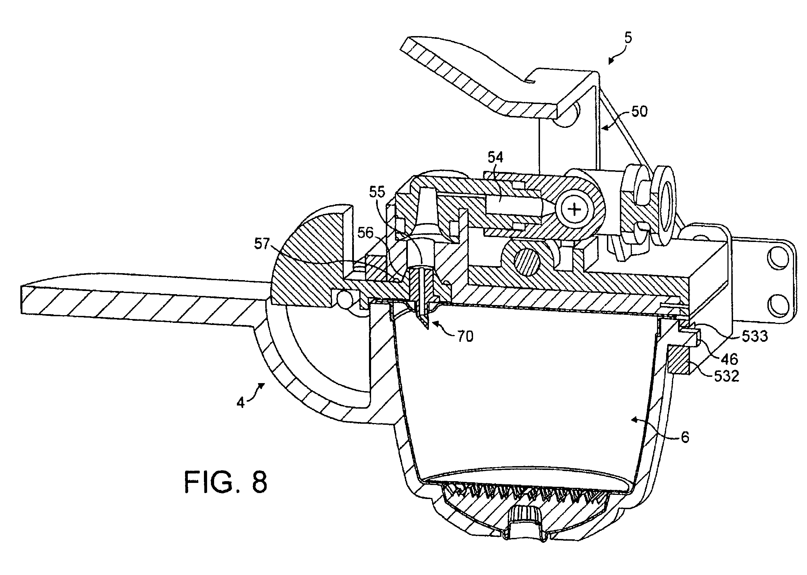

As shown in Figure 8, in the position of closure of the supply unit 5 against the capsule-holder 4, the fluid connection is established. The fluid supply means of the mobile supply base comprise a fluid connector 50 furnished with an internal duct 54 to transport the fluid to an outlet 55 placed in communication with the inlet orifice 76 of the injector. To promote a connection withstanding high pressures, the connector of the supply unit preferably terminates in a conical portion 56 forming a free cone-on-cone connection with the inlet portion 77 of the injector. A seal 57, such as an O-ring, may be added to ensure a good seal of the connection.

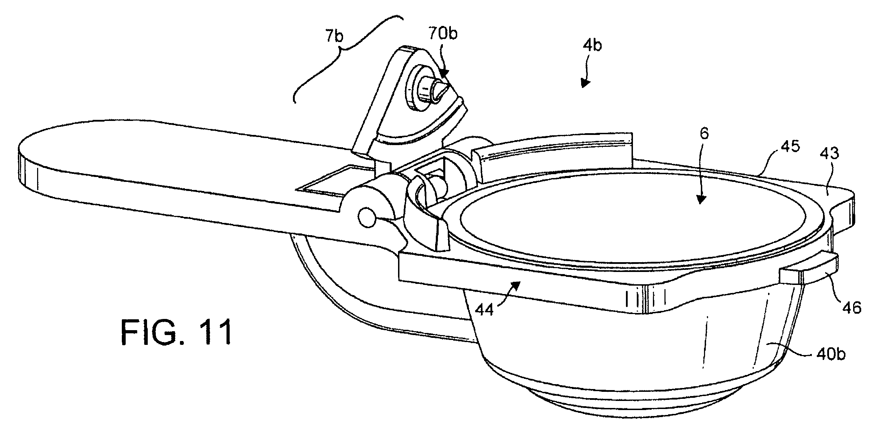

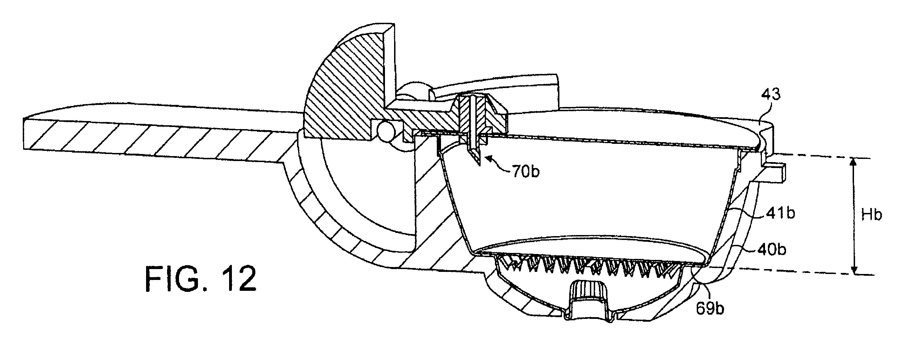

Figures 11 to 13 show another type of capsule-holder 4b according to the invention. This capsule-holder 4b is designed to be inserted into the supply unit 5 thanks to the complementary engagement means 44, 45, 46 which remain identical to the previously described engagement means of the capsule-holder 4. The result is therefore that the capsule-holders 4, 4b are both interchangeable and removable from the supply unit 5.

The capsule-holders 4, 4b however have at least one specific feature that distinguishes them. This feature relates to:
i) the shape and/or the size of the housing to receive the capsule; and/or
ii) the injection method by which the injector is configured to deliver the fluid into the capsule.

In the example illustrated, the capsule-holder 4b is configured in terms of volume and injection method to receive more particularly capsules containing ingredients requiring a small storage volume and a wetting distributed over the cross section of the bed of substance. The ingredients may be, for example, the grounds of, for example, coffee or tea.

The capsule-holder 4b thus comprises a cup 40b which defines an internal surface or housing 41b whose volume is smaller than the volume of the internal surface or housing 41 of the capsule-holder 4 previously described. In particular, the depth Hb separating the internal bearing edge 69b from the top edge 43 is shorter than the same depth H of the capsule 4. As a result, the capsule-holder receives capsules whose internal ration is thinner, which may be more appropriate for example for extracting espresso or filter coffees from a bed of ground coffee.

On the other hand, the capsule-holder 4 of Figure 5 has, for its part, a housing 41 whose depth H is greater so that it can receive capsules whose ration volume is greater, which may be more appropriate for storing a larger quantity of ingredients, such as milk powder, and/or for delivering larger volumes of drink, for example, between 110 and 500 ml of liquid.

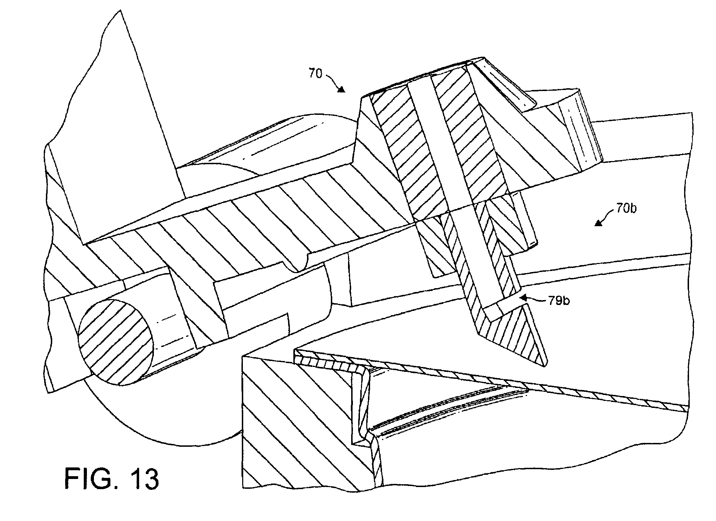

Another difference of the capsule-holders 4, 4b lies in the injection method. The capsule-holder 4b comprises an injection system 7b operating according to the same principle of insertion into the capsule as the injection system 7 of the capsule 4 but nevertheless with an injector 70b with a different injection configuration. As shown in Figure 13 in detail, the injector 70b has an outlet orifice 79b which differs in its shape and direction. The shape and orientation of the outlet orifice are thus configured to distribute the fluid in a more dispersed manner, that is to say over a larger surface of the cross section, which improves the wetting of the ingredients and reduces the formation of undesirable preferential paths. The shape of the orifice is preferably a slot partially and transversely intersecting the cylindrical portion of the injector. The direction is also oriented more transversely in the capsule. Thus, because of the shape and orientation, the jet effect may be attenuated and the fluid may pass through the bed of ingredients in order to more evenly wet over the whole cross section of the bed of substance.

It is therefore understandable that the capsule-holders are provided with features suited to the ingredients contained in the capsule and/or the preparation to be delivered. The device therefore provides greater flexibility, ease of adaptation and the possibility of delivering a wider range of drinks or preparations including, for example, drinks such as espresso coffee, filter coffee, instant coffee, milk-based specialities such as cappuccino, latte or else tea, chocolate or else large volume refreshing drinks based on coffee, tea, milk, cocoa, fruit juice, or else special preparations containing nutritional ingredients, for example, product formulas for infants, for sports people, for the sick or for the aged.

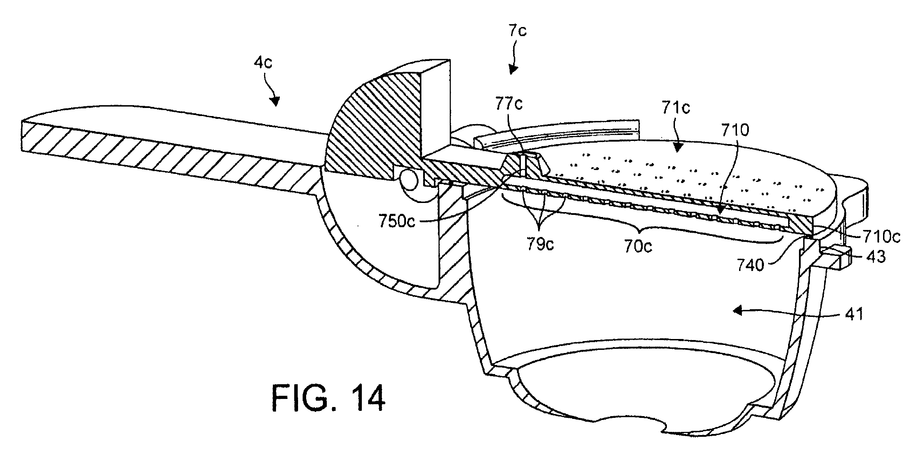

Figure 14 shows a different embodiment of a capsule-holder 4c comprising an injection system 7c that differs from the preceding method. In this case, the injection system 7c comprises an injector 70c in the form of a wall or cover 71c furnished with a fluid manifold or collection chamber 710. This manifold 710 distributes the fluid across a multitude of injection orifices 79c opening into the housing 41 of the capsule-holder. Such a capsule-holder may receive a capsule comprising a top surface permeable to the fluid such as a filter paper, a woven or unwoven textile wall or a grille or simply a capsule open on this side. The fluid is distributed, as in the injector of the preceding embodiments, through an inlet portion 77c, an internal duct 750c opening into the manifold. The injector 70c is sealed from the capsule by means of a seal 740 located at the interface between the edge 710c of the injector and the edge 43 of the capsule-holder. The seal 740 may form part of the injector itself and/or of the capsule-holder and/or of the capsule itself. Such a capsule-holder may thus receive capsules furnished with filtering walls for example. The capsules may be fully flexible and furnished with filtering walls with a peripheral edge for clamping in the capsule-holder.

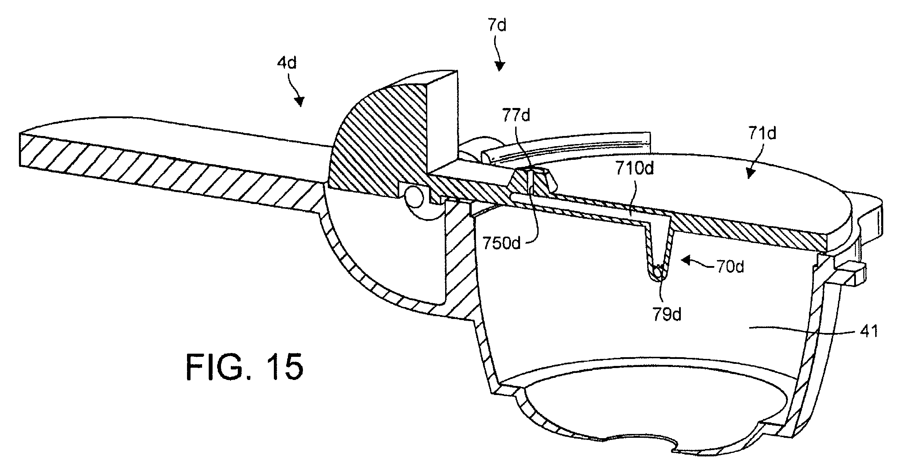

Another embodiment of a capsule-holder 4d is illustrated in Figure 15. In this case, the injection system 7d comprises an injector 70d having the form of a central needle made in a plate or cover 71d which extends inside the housing 41 of the capsule-holder. The needle distributes the fluid through injection orifices 79d made in the periphery of the needle. As in the preceding embodiments, the fluid originates from an inlet portion 77d, an internal duct 750d opening into a manifold 710d. The other elements of the injection system remain similar to the other embodiments. Such an arrangement allows the fluid to be distributed radially and at a desired depth in the housing. The needle may be perforating or non-perforating depending on whether the capsule has a wall to be perforated or a wall furnished with an already preformed opening.

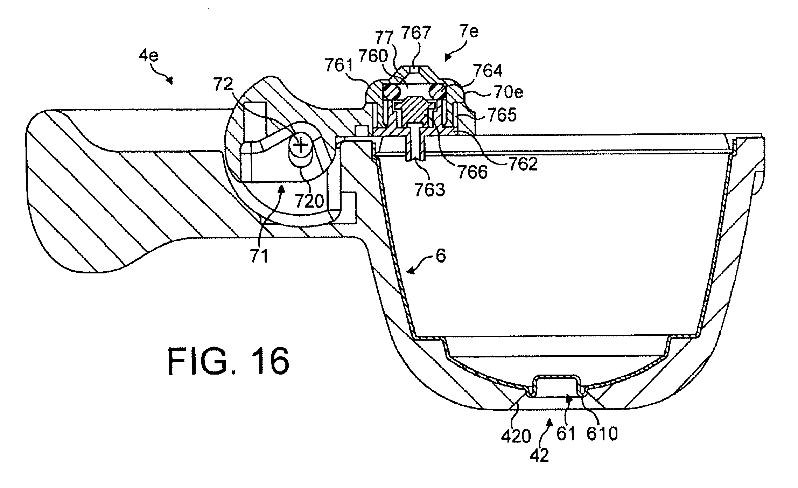

Another variant of the capsule-holder is illustrated in Figure 16. The capsule-holder 4e differs from the capsule-holder 4 of Figures 3-6 through certain modifications made to the injection system 7e. The system comprises an injector 70e comprising an anti-return valve device. A chamber 760 is provided in the injector by the assembly of a first top piece 761 and a second bottom piece 762 supporting the injection duct 763. The chamber is sealed by an O-ring 764 covering the junction 765 of the assembly portion (for example, a screw thread) between the two pieces. The chamber is closed off by a needle 766 which is pressed by an elastic element such as a helical spring (not shown). When the pressurized fluid enters the chamber, the needle 766 is pushed back, which compresses the spring and opens the inlet 767 of the chamber to allow the fluid to pass through the duct 763 and therefore be inserted into the capsule 6.

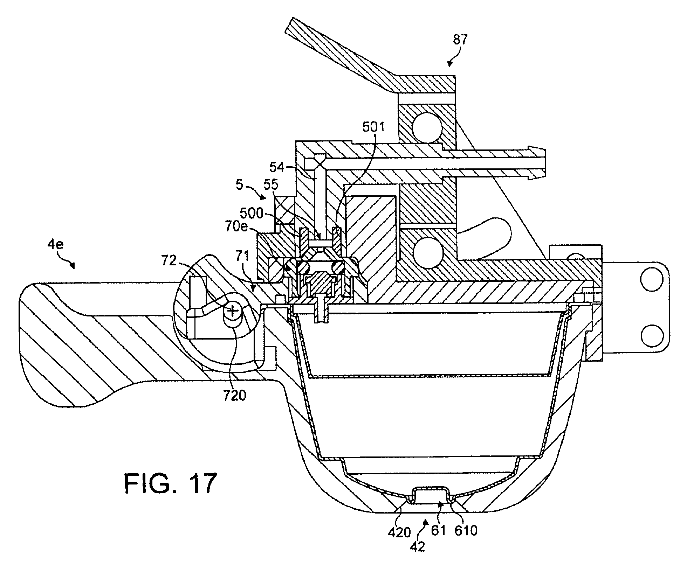

Figure 17 shows the connection of the injector 70e in communication against the fluid supply unit 5. The connector of the unit comprises a tubular element 500 made of deformable material which collapses, on simple pressure, against the external conical surface of the connection portion of the injector. The tubular element is inserted into a recess 501 made at the end of the unit's supply duct. The tubular element 500 delimits the fluid outlet 55 of the duct 54 of the unit. It presses on the conical or flared surfaces of the connection portion 77 of the injector and therefore serves both as a bearing and connection surface and as a seal. Such an element may for example be an elastomer or silicone tube whose ends are straight (non-conical) or conical and compress on the connection surface of the injector.

The support piece 71 of the injector is mounted rotatably on an articulation shaft 72 mounted in an opening in order to provide a certain amplitude of vertical movement to allow the support piece a certain clearance in lateral tilting, so that the sealing zone of the injector is positioned more precisely against the inlet wall of the capsule. For this, the support piece is traversed by an oblong opening 720 that is vertically oriented and in which the cross shaft 72 for keeping the piece on the capsule-holder body can tilt. This ensures a better seal of the injection into the capsule. The capsule-holder 4e also has a more ergonomic dish-shaped handle making it easier to hold. The edge 420 of the discharge orifice 42 also has a bevelled cut-away to come away from the edge 610 of the said orifice 61 of the capsule in order to prevent contact with the pouring liquid and also to facilitate the discharge of liquid in the event of any contact with the latter.

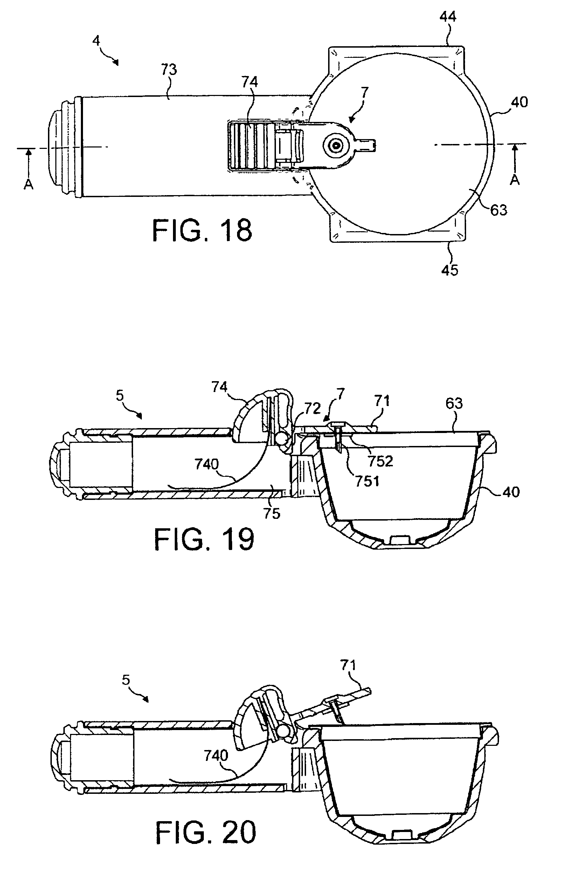

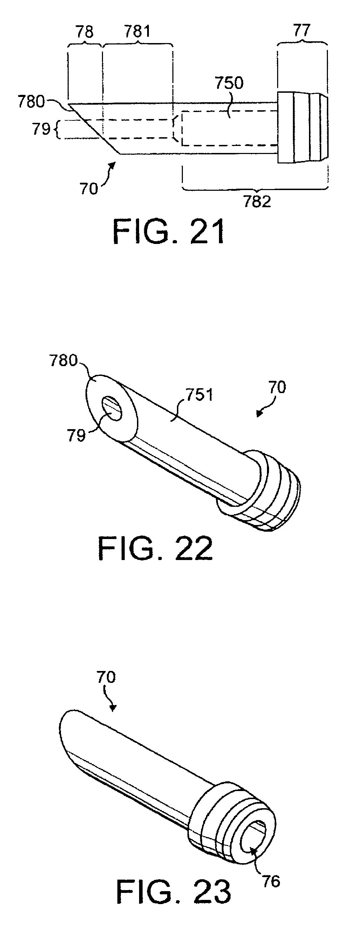

Figures 18 to 23 show another possible embodiment of the capsule-holder and the injector according to the invention. The capsule-holder 4 of Figure 18 has the same elements as those of the previously described embodiments and the reference numbers are therefore identical to facilitate the identification of the latter. The injection system comprises an actuation means 74 in the form of a pawl used to move the injector 70, from a position of injecting fluid into the capsule (Figure 19) to a retracted position (Figure 20). The actuation means 74 moves the support piece or plate 71 on which the injector 70 of Figures 21 to 23 is mounted. The movement is made along the rotation shaft 72 situated at the rear of the cup 40 towards the front of the handle 73. An elastic means 740, such as a leaf spring, puts up an elastic resistance to the actuation of the actuation means 74 in order to provide, in the absence of force on the elastic means, the return to the position of injection or of insertion of the injector into the cup. The advantage is to ensure that the injector point is directed towards the cup, which limits the risks of pricking when the capsule-holder has no capsule in it. The elastic means is thus a leaf connected to the actuation means and presses against the recess 75 of the handle. When the elastic means is actuated, the leaf is flexed and its radius of curvature diminishes as is shown in Figure 20, which accentuates the return forces on the actuation means when the force of the user on the pawl is relaxed.

Figures 21 to 23 show a possible embodiment of the injector. In this particular case, the injector has a nozzle 751 in which an internal duct is bored with a rectilinear axis 750 which extends from the inlet orifice 76 to the outlet orifice 79. In other words, the outlet orifice 79 under pressure of the fluid is placed towards the bottom of the cup 40, substantially vertically. Maintenance of the duct is thus made easier. It is easier to unplug the duct when the latter is obstructed by solid particles (scale residues, coffee grains, etc.) than a duct having a bend or a variation of inclination.

The injector nozzle ends in a bevel-shaped cut-away surface 780. At the base of the nozzle 751 a sealing means is provided such as a section enlargement in the form of an annular portion 752 (Figure 19) made of elastic material, such as elastomer or silicone. The annular portion may be flexible and in the shape of an inverted U or slightly concave to promote its adaptation to the capsule wall when the latter is swollen under the effect of the internal pressure. When the injector is pressed against the top wall of the capsule, the nozzle is then inserted through the wall and the annular portion 752 is pressed against the wall in order to make the seal between the surface of the nozzle thus inserted and the perforation or cut-away hole. The elastic means 740 of the injection system provides the force necessary for a good application of the annular portion 752 against the capsule wall.

The internal duct has at least one portion 781, of small cross section or diameter, performing a function of retaining the fluid in the injector by capillary attraction. The duct is extended in the direction of the inlet orifice by a portion of larger diameter 782. The small cross section internal duct ends in the outlet orifice 79, which also has the effect of producing a powerful jet of fluid into the capsule at the time of the injection. This jet causes a powerful mixing effect in the capsule and helps the soluble substances to dissolve rapidly and completely. The size of the internal diameter of the capillary attraction section is less than 1 mm, preferably less than 0.7 mm, better still of the order of 0.6 to 0.4 mm. The portion of greater diameter 782 downstream is used to ensure that the pressure loss caused by the injector, particularly the portion of reduced section, is not too great. The total loss of pressure of the injector may be of the order of 2 to 5 bar approximately and the pump must be sufficiently powerful to overcome this pressure loss and send the fluid at a boost pressure of approximately 2 to 4 bar. The pump of the supply unit must therefore be chosen to develop a static pressure lying between a minimum of 4 bar, preferably between 5 and 15 bar.

The air seal function caused by the capillary duct is important for preventing the problem of liquid drips or leaks which escape through the bottom of the capsule due to the ingress of air into the injector then into the capsule. To prevent this phenomenon, the portion 781 is therefore designed to remain full of liquid by capillary attraction when the capsule-holder is removed from the rest of the machine. As previously discussed, this capillary duct could be replaced by an anti-return valve or any equivalent means.

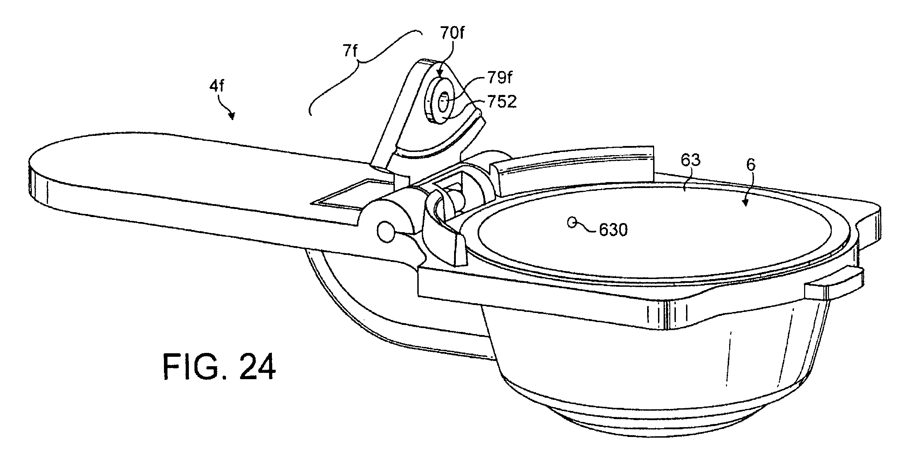

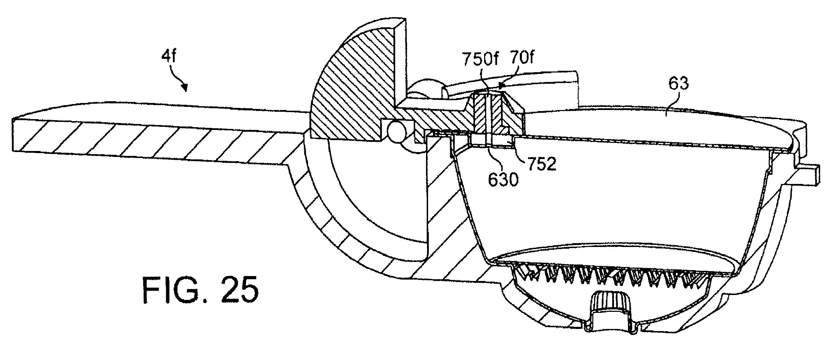

Figures 24 and 25 show an embodiment in which the injector nozzle is replaced by a simple connector 752 which ends in an orifice 79f. The injector adjusts to the contact of the wall 63 facing an orifice 630 in the capsule. In this case, the orifice preexists and is not pierced by the injector. The connector may be a cylindrical element or of any other shape. The connector may be partially or totally made of elastomer serving as a seal. As shown in Figure 25, the wall 63 of the capsule may be substantially deformed by the mechanical pressure exerted by the injection device, which ensures a better seal. In an alternative (not shown), the cover is more rigid, therefore less deformable or not deformable at all and it is the connector that compresses against the wall to compensate for the clearances and make the seal. In another possible embodiment, both elements, wall 63 and connector 752, are deformable.

The invention is of course not limited to just the embodiments described. For example, other embodiments of equivalent capsule-holders can be envisaged depending on the type of capsule or the type of drink to be prepared.

## Claims

1. Capsule-holder (4, 4b, 4c, 4d, 4e, 4f) intended to be removably connected to a fluid supply unit (5) of a drink preparation device to prepare a drink from a food substance contained in a capsule by inserting a fluid into the said capsule, the said capsule-holder comprising:
a cup (40) furnished with a housing (41) to receive the capsule (6),
the capsule-holder comprising an injection device (7, 7b, 7c, 7d, 7e, 7f) comprising an injector (70, 70b, 70c, 70d, 70e, 70f) **characterized in that** the injector (70, 70b, 70c, 70d, 70e, 70f) is configured for being connnected to the fluid supply unit (5) and comprises a fluid inlet orifice (76, 77d, 77c, 767), an injection duct (750, 750c, 750d, 750f, 710) and at least one injection orifice (79, 79b, 79c, 79d, 79f) for injecting at least one pressurized jet of fluid into the capsule (6),
and **in that** the injector (70, 70b, 70e, 70f) further comprises a sealing element (752, 781) to provide a seal between the injector and the wall (63) of the capsule, for transferring this fluid from the supply unit (5) into the capsule (6) in the form of at least one jet of fluid.

2. Capsule-holder (4, 4b, 4c, 4d, 4e, 4f) according to Claim 1, **characterized in that** the injector comprises a connection portion (77) forming at least one sealed bearing surface intended to come to bear against a fluid supply duct (500) of the supply unit (5).

3. Capsule-holder (4, 4b, 4c, 4d, 4e, 4f) according to Claim 2, **characterized in that** the said at least one bearing surface is substantially frustoconical.

4. Capsule-holder (4, 4e) according to any one of Claims 1 to 3, **characterized in that** the injector (70, 70e) comprises a nozzle (751) which perforates, cuts away or inserts itself through a wall (63) of the capsule or comprises a connector (752) which is simply arranged against an orifice (630) of this wall (63) so as to send the fluid through the orifice under pressure into the capsule.

5. Capsule-holder (4, 4e) according to Claim 4, **characterized in that** the injector (70, 70e) comprises a sealing element (752) at the base of the nozzle (751) or of the connector (752) to provide a seal between the nozzle or connector and the said wall (63) of the capsule.

6. Capsule-holder (4, 4e) according to Claim 5, **characterized in that** the injection device (7) comprises a support piece (71) and an elastic means (740) which keep the injector pressed against the capsule wall.

7. Capsule-holder (4c, 4d) according to any one of Claims 1 to 3, **characterized in that** the injector (70) comprises an injection wall or cover (71c, 71d) entirely covering the cup (40).

8. Capsule-holder (4c) according to Claim 7, **characterized in that** the wall or cover (71c) is furnished with a fluid delivery manifold (710) and a multitude of injection orifices (79c).

9. Capsule-holder (4d) according to any one of Claims 1 to 3, **characterized in that** the injection wall or cover (71d) is furnished with a central needle which delivers the fluid through the orifices (79d) made in the latter.

10. Capsule-holder (4, 4e) according to any one of Claims 1 to 6, **characterized in that** the injector (70, 70e) comprises a means of blocking the said duct.

11. Capsule-holder (4e) according to Claim 10, **characterized in that** the blocking means is a valve (760-766).

12. Capsule-holder (4) according to Claim 10, **characterized in that** the blocking means is a portion of duct (781) of small cross section causing a retention of liquid in the duct (750) by capillary attraction.

13. Capsule-holder (4) according to Claim 12, **characterized in that** the capillary attraction portion (781) has a diameter of less than 1 mm.

14. Capsule-holder (4) according to Claim 12 or 13, **characterized in that** the capillary attraction portion (781) has a length of at least 1 mm and less than 3 mm.

15. Capsule-holder (4) according to any one of Claims 1 to 6 and 10 to 14, **characterized in that** the injection duct (750) has a rectilinear axis.

16. Capsule-holder (4) according to Claim 15, **characterized in that** the axis of the duct is oriented vertically towards the bottom of the cup (40).

17. Capsule-holder (4, 4b, 4c, 4d, 4e, 4f) according to any one of the preceding claims comprising guidance means (44, 45) in the form of lateral ribs for the insertion of the capsule-holder into the fluid supply unit.

18. Combination comprising a capsule-holder (4, 4b, 4c, 4d, 4e, 4f) containing a food substance for the preparation of a drink **characterized in that:**
the capsule (6) comprises walls (60, 63) defining an external volume matching the housing (41) of the capsule-holder and a lateral edge (62) with dimensions suitable for bearing against a bearing rim (43) of the capsule-holder and,
the capsule-holder is **characterized** according to any one of the preceding claims.

## Patentansprüche

1. Kapselhalterung (4, 4b, 4c, 4d, 4e, 4f), dazu gedacht, um entfernbar an eine Fluidzufuhreinheit (5) einer Getränkezubereitungsvorrichtung zum Zubereiten eines Getränks aus einer Lebensmittelsubstanz angeschlossen zu werden, die in einer Kapsel enthalten ist, durch Einbringen eines Fluids in die Kapsel, wobei die Kapselhalterung umfasst:
eine Schale (40), ausgestattet mit einem Gehäuse (41) zum Aufnehmen der Kapsel (6),
wobei die Kapselhalterung eine Einspritzvorrichtung (7, 7b, 7c, 7d, 7e, 7f) umfasst, die einen Einspritzer (70, 70b, 70c, 70d, 70e, 70f) umfasst, **dadurch gekennzeichnet, dass** der Einspritzer (70, 70b, 70c, 70d, 70e, 70f) ausgelegt ist, um an die Fluidzufuhreinheit (5) angeschlossen zu werden, und eine Fluideinlassöffnung (76, 77d, 77c, 767), eine Einspritzleitung (750, 750c, 750d, 750f, 710) und zumindest eine Einspritzöffnung (79, 79b, 79c, 79d, 79f) zum Einspritzen zumindest eines Druckfluidstrahls in die Kapsel (6) aufweist,
und **dadurch**, dass der Einspritzer (70, 70b, 70e, 70f) des weiteren ein Abdichtelement (752, 781) zum Schaffen einer Dichtung zwischen dem Einspritzer und der Wand (63) der Kapsel aufweist, um dieses Fluid aus der Zufuhreinheit (5) in die Kapsel (6) in der Form zumindest eines Fluidstrahls zu überführen.

2. Kapselhalterung (4, 4b, 4c, 4d, 4e, 4f) gemäß Anspruch 1, **dadurch gekennzeichnet, dass** der Einspritzer einen Anschlussabschnitt (77) aufweist, der zumindest eine abdichtende Lagerfläche bildet, die dazu gedacht ist, um gegen eine Fluidzufuhrleitung (500) der Zufuhreinheit (5) zu liegen zu kommen.

3. Kapselhalterung (4, 4b, 4c, 4d, 4e, 4f) gemäß Anspruch 2, **dadurch gekennzeichnet, dass** die zumindest eine Lagerfläche im Wesentlichen kegelstumpfförmig ist.

4. Kapselhalterung (4, 4e) gemäß einem der Ansprüche 1 bis 3, **dadurch gekennzeichnet, dass** der Einspritzer (70, 70e) eine Düse (751) aufweist, die eine Wand (63) der Kapsel perforiert, freischneidet oder sich selbst **dadurch** einbringt, oder einen Verbinder (752) umfasst, der einfach gegen eine Öffnung (630) dieser Wand (63) angeordnet ist, um das Fluid durch die Öffnung unter Druck in die Kapsel zu schicken.

5. Kapselhalterung (4, 4e) gemäß Anspruch 4, **dadurch gekennzeichnet, dass** der Einspritzer (70, 70e) ein Dichtungselement (752) an der Basis der Düse (751) oder des Verbinders (752) umfasst, um eine Dichtung zwischen der Düse oder dem Verbinder und der Wand (63) der Kapsel zu schaffen.

6. Kapselhalterung (4, 4e) gemäß Anspruch 5, **dadurch gekennzeichnet, dass** die Einspritzvorrichtung (7) ein Haltestück (71) und eine elastische Vorrichtung (740) umfasst, die den Einspritzer gegen die Kapselwand gedrückt hält.

7. Kapselhalterung (4c, 4d) gemäß einem der Ansprüche 1 bis 3, **dadurch gekennzeichnet, dass** der Einspritzer (70) eine Einspritzwand oder Einspritzabdeckung (71c, 71d) umfasst, die die Schale (40) vollständig abdeckt.

8. Kapselhalterung (4c) gemäß Anspruch 7, **dadurch gekennzeichnet, dass** die Wand oder Abdeckung (71c) mit einem Fluidlieferkrümmer (710) und einer Vielzahl an Einspritzöffnungen (79c) ausgestattet ist.

9. Kapselhalterung (4d) gemäß einem der Ansprüche 1 bis 3, **dadurch gekennzeichnet, dass** die Einspritzwand oder Einspritzabdeckung (71d) mit einer zentralen Nadel ausgestattet ist, die das Fluid durch die Öffnungen (79d) liefert, die in der Letzteren ausgebildet sind.

10. Kapselhalterung (4, 4e) gemäß einem der Ansprüche 1 bis 6, **dadurch gekennzeichnet, dass** der Einspritzer (70, 70e) eine Vorrichtung zum Blockieren der Leitung umfasst.

11. Kapselhalterung (4e) gemäß Anspruch 10, **dadurch gekennzeichnet, dass** die Blockiereinrichtung ein Ventil (760-766) ist.

12. Kapselhalterung (4) gemäß Anspruch 10, **dadurch gekennzeichnet, dass** die Blockiereinrichtung ein Abschnitt der Leitung (781) mit kleinem Querschnitt ist, der ein Zurückhalten von Flüssigkeit in der Leitung (750) durch Kapillarkraft bewirkt.

13. Kapselhalterung (4) gemäß Anspruch 12, **dadurch gekennzeichnet, dass** der Kapillarkraftabschnitt (781) einen Durchmesser von weniger als 1 mm hat.

14. Kapselhalterung (4) gemäß Anspruch 12 oder 13, **dadurch gekennzeichnet, dass** der Kapillarkraftabschnitt (781) eine Länge von zumindest 1 mm und weniger als 3 mm aufweist.

15. Kapselhalterung (4) gemäß einem der Ansprüche 1 bis 6 und 10 bis 14, **dadurch gekennzeichnet, dass** die Einspritzleitung (750) eine geradlinige Achse aufweist.

16. Kapselhalterung (4) gemäß Anspruch 15, **dadurch gekennzeichnet, dass** die Achse der Leitung vertikal in Richtung des Bodens der Schale (40) orientiert ist.

17. Kapselhalterung (4, 4b, 4c, 4d, 4e, 4f) gemäß einem der vorhergehenden Ansprüche mit Führungsmitteln (44, 45) in der Form seitlicher Rippen zum Einsetzen der Kapselhalterung in die Fluidzufuhreinheit.

18. Kombination mit einer Kapselhalterung (4, 4b, 4c, 4d, 4e, 4f), die eine Lebensmittelsubstanz für die Zubereitung eines Getränks enthält, **dadurch gekennzeichnet, dass:**
die Kapsel (6) Wände (60, 63) umfasst, die ein äußeres Volumen definieren, das dem Gehäuse (41) der Kapselhalterung entspricht, und einen seitlichen Rand (62) umfasst, mit Abmessungen, die zum Abstützen gegen einen Lagerrand (43) der Kapselhalterung geeignet sind, und
die Kapselhalterung gemäß einem der vorhergehenden Ansprüche **gekennzeichnet** ist.

## Revendications

1. Porte-capsule (4, 4b, 4c, 4d, 4e, 4f) destiné à être raccordé de façon amovible à une unité (5) d'alimentation en fluide d'un dispositif de préparation de boisson pour préparer une boisson à partir d'une substance alimentaire contenue dans une capsule en introduisant un fluide dans ladite capsule, ledit porte-capsule comportant :
une coupelle (40) pourvue d'un logement (41) pour recevoir la capsule (6),
le porte-capsule comportant un dispositif d'injection (7, 7b, 7c, 7d, 7e, 7f) comportant un injecteur (70, 70b, 70c, 70d, 70e, 70f), **caractérisé en ce que** l'injecteur (70, 70b, 70c, 70d, 70e, 70f) est configuré pour être raccordé à l'unité (5) d'alimentation en fluide et comporte un orifice (76, 77d, 77c, 767) d'entrée de fluide, un conduit d'injection (750, 750c, 750d, 750f, 710) et au moins un orifice d'injection (79, 79b, 79c, 79d, 79f) pour injecter au moins un jet de fluide sous pression dans la capsule (6),
et **en ce que** l'injecteur (70, 70b, 70e, 70f) comporte en outre un élément d'étanchéité (752, 781) destiné à réaliser un joint étanche entre l'injecteur et la paroi (63) de la capsule, pour transférer ce fluide de l'unité d'alimentation (5) jusque dans la capsule (6) sous la forme d'au moins un jet de fluide.

2. Porte-capsule (4, 4b, 4c, 4d, 4e, 4f) selon la revendication 1, **caractérisé en ce que** l'injecteur comporte une partie de raccordement (77) formant au moins une surface d'appui étanche prévue pour venir porter contre un conduit (500) d'alimentation en fluide de l'unité d'alimentation (5).

3. Porte-capsule (4, 4b, 4c, 4d, 4e, 4f) selon la revendication 2, **caractérisé en ce que** ladite, au moins une, surface d'appui est sensiblement tronconique.

4. Porte-capsule (4, 4e) selon l'une quelconque des revendications 1 à 3, **caractérisé en ce que** l'injecteur (70, 70e) comporte une buse (751) qui perfore, enlève par découpage ou s'insère elle-même à travers une paroi (63) de la capsule ou comporte un raccord (752) qui est simplement agencé contre un orifice (630) de cette paroi (63) afin d'envoyer le fluide à travers l'orifice, sous pression, jusque dans la capsule.

5. Porte-capsule (4, 4e) selon la revendication 4, **caractérisé en ce que** l'injecteur (70, 70e) comporte un élément d'étanchéité (752) à la base de la buse (751) ou du raccord (752) pour former un joint étanche entre la buse ou le raccord et ladite paroi (63) de la capsule.

6. Porte-capsule (4, 4e) selon la revendication 5, **caractérisé en ce que** le dispositif d'injection (7) comporte une pièce (71) de support et un moyen élastique (740) pour maintenir l'injecteur pressé contre la paroi de la capsule.

7. Porte-capsule (4c, 4d) selon l'une quelconque des revendications 1 à 3, **caractérisé en ce que** l'injecteur (70) comporte une paroi ou un couvercle (71c, 71d) d'injection recouvrant entièrement la coupelle (40).

8. Porte-capsule (4c) selon la revendication 7, **caractérisé en ce que** la paroi ou le couvercle (71c) est pourvu d'un collecteur (710) de distribution de fluide et de multiples orifices d'injection (79c).

9. Porte-capsule (4d) selon l'une quelconque des revendications 1 à 3, **caractérisé en ce que** la paroi ou le couvercle d'injection (71d) est pourvu d'une aiguille centrale qui délivre le fluide à travers les orifices (79d) réalisés dans ce dernier.

10. Porte-capsule (4, 4e) selon l'une quelconque des revendications 1 à 6, **caractérisé en ce que** l'injecteur (70, 70e) comporte un moyen de blocage dudit conduit.

11. Porte-capsule (4e) selon la revendication 10, **caractérisé en ce que** le moyen de blocage est un clapet (760-766).

12. Porte-capsule (4) selon la revendication 10, **caractérisé en ce que** le moyen de blocage est une partie de conduit (781) de faible section transversale provoquant une retenue de liquide dans le conduit (750) par attraction capillaire.

13. Porte-capsule (4) selon la revendication 12, **caractérisé en ce que** la partie (781) d'attraction capillaire a un diamètre de moins de 1 mm.

14. Porte-capsule (4) selon la revendication 12 ou 13, **caractérisé en ce que** la partie (781) d'attraction capillaire a une longueur d'au moins 1 millimètre et de moins de 3 millimètres.

15. Porte-capsule (4) selon l'une quelconque des revendications 1 à 6 et 10 à 14, **caractérisé en ce que** le conduit d'injection (750) a un axe rectiligne.

16. Porte-capsule (4) selon la revendication 15, **caractérisé en ce que** l'axe du conduit est orienté verticalement vers le fond de la coupelle (40).

17. Porte-capsule (4, 4b, 4c, 4d, 4e, 4f) selon l'une quelconque des revendications précédentes, comportant des moyens de guidage (44, 45) sous la forme de nervures latérales pour l'insertion du porte-capsule dans l'unité d'alimentation en fluide.

18. Combinaison comportant un porte-capsule (4, 4b, 4c, 4d, 4e, 4f) contenant une substance alimentaire pour la préparation d'une boisson, **caractérisée en ce que :**
la capsule (6) comporte des parois (60, 63) définissant un volume extérieur s'adaptant au logement (41) du porte-capsule et un bord latéral (62) de dimensions appropriées pour porter contre un rebord d'appui (43) du porte-capsule, et
le porte-capsule est **caractérisé** conformément à l'une quelconque des revendications précédentes.
